# EUROPÄISCHE PATENTSCHRIFT

(11) **EP 0 840 864 B1**
(45) Veröffentlichungstag und Bekanntmachung des Hinweises auf die Patenterteilung: **12.01.2000**
(21) Anmeldenummer: 96928366.2
(22) Anmeldetag: 20.07.1996
(51) Int. Cl.: F16H 61/12

(54) **FEHLERERKENNUNGSVERFAHREN FÜR AUTOMATISCHE GETRIEBE**
ERROR RECOGNITION PROCESS FOR AUTOMATIC GEAR BOXES TRANSMISSION
PROCEDE DE RECONNAISSANCE D'ERREURS POUR BOITES DE VITESSE AUTOMATIQUES

(30) Priorität: 27.07.1995 DE 19527414
(43) Veröffentlichungstag der Anmeldung: 13.05.1998
(73) Patentinhaber: ZF FRIEDRICHSHAFEN Aktiengesellschaft, 88038 Friedrichshafen (DE)
(72) Erfinder: DREIBHOLZ, Ralf, D-88074 Meckenbeuren (DE); FROTSCHER, Gerd, D-88048 Friedrichshafen (DE); STAIGER, Kai, D-88074 Meckenbeuren (DE)
(86) Internationale Anmeldenummer: EP9603209
(87) Internationale Veröffentlichungsnummer: WO9705409

(56) Entgegenhaltungen:
- EP-A- 0 719 967
- GB-A- 2 213 220
- US-A- 5 129 287
- US-A- 5 142 945
- US-A- 5 182 969

## Beschreibung

Die Erfindung bezieht sich auf Verfahren zum Überwachen eines Schaltablaufes, insbesondere in einem automatischen Getriebe, bei dem ein zu einer ersten Getriebeübersetzung gehörendes (gehendes) Schaltelement geöffnet und ein zu einer weiteren Getriebeübersetzung gehörendes (kommendes) Schaltelement geschlossen wird.

Bei rein elektronisch gesteuerten Lastschaltgetrieben muß nach einer Lastübernahme durch das zugeschaltete Schaltelement geprüft werden, ob das abgeschaltete Schaltelement auch zuverlässig geöffnet hat. Dies kann dadurch geschehen, daß auftretender Schlupf am alten Schaltelement überwacht wird. Der Schlupf wird in Abhängigkeit von Turbinendrehzahl und Abtriebsdrehzahl berechnet. Entsteht nach einer gewissen Zeit kein Schlupf nach Aufprägen des Schaltmoments am zuschaltenden Schaltelement, wird der alte Gang beibehalten, um ein Blockieren des Getriebes zu vermeiden (EP-A 0 436 977).

Aus der DE-A 32 05 767 ist ein Verfahren zum Einstellen des hydraulischen Druckes eines Schaltelements eines automatischen Getriebes bekanntgeworden, bei dem die Eingangsdrehzahl und die Abtriebsdrehzahl des Getriebes ermittelt werden und der Druck so eingestellt wird, daß das Übersetzungsverhältnis des Getriebes während eines Gangwechsels einer vorgegebenen Zeitfunktion folgt. Der gesamte Umschaltvorgang erfolgt vorzugsweise zweistufig, wobei bis zum Freilaufpunkt, das heißt dem Punkt, in dem die dem alten Gang zugeordneten Reibelemente lösen, der Druck gesteuert wird und sich anschließend die Regelung auf ein vorgegebenes Übersetzungsverhältnis oder einen Verlauf des Übersetzungsverhältnisses anschließt. Wird der Freilaufpunkt im Getriebe nicht erreicht, sorgt eine Zeitsteuerung dafür, daß der Druck rampenförmig so lange erhöht wird, bis der Freilaufpunkt erreicht ist.

In der US 5,182,969 ist eine hydraulische Kontrolleinrichtung für ein Automatgetriebe beschrieben, wobei eine Mehrzahl von Kontrollventilen mit reibbetätigten Elementen in Verbindung stehen. Dabei ist eine Mehrzahl von Magnetventilen mit den Kontrollventilen verbunden, um diese mit hydraulischem Druck zu versorgen. Eine Kontrolleinrichtung bestimmt, ob ein Hochschalten des Getriebes stattgefunden hat oder nicht. Dazu widerum ermittelt ein Detektor entweder eine Motordrehzahl oder eine Längsbeschleunigung des Fahrzeugs. Eine Fehlererkennungsvorrichtung verhindert ein Hochschalten aufgrund eines Vergleichs des erkannten mit einem vorher bestimmten Wert.

Die Einflüsse auf das Abtriebsmoment, die durch ein Nichtöffnen des alten Schaltelementes entstehen, sind insbesondere folgende:

Bei einem hohen Motordrehmoment besteht die Gefahr, daß das Moment am Getriebeausgang auf einen sehr geringen Wert einbricht. Dieser Effekt wirkt sich besonders negativ zum Beispiel bei einem Überholvorgang aus, bei dem die volle Motorleistung benötigt bzw. erwartet wird.
Bei kleinem Motordrehmoment entsteht anstelle eines positiven Zugmoments ein etwa gleich großes Schubmoment. Dies könnte insbesondere bei glatter Fahrbahn zum Blockieren der Räder führen, zumindest dann, wenn beim Überschreiten der Zeitstufe der volle Druck auf das zuschaltende Schaltelement gegeben würde.

Der vorliegenden Erfindung liegt die Aufgabe zugrunde, Wege aufzuzeigen, die während einer Schaltung eine Prüfung erlauben, ob das abzuschaltende, alte Schaltelement zuverlässig geöffnet und das zuzuschaltende, neue Schaltelement zuverlässig geschlossen wird.

Diese Aufgabe wird mit den, auch die kennzeichnenden Merkmale der Patentansprüche 1 und 2 aufweisenden, gattungsgemäßen Verfahren zum Überwachen eines Schaltablaufes gelöst.

Weitere, für die Erfindung wesentliche Merkmale sowie die hieraus resultierenden Vorteile sind der nachfolgenden Beschreibung der beiden Verfahren zur Lösung der gestellten Aufgabe zu entnehmen.

Bei einem ersten Verfahren wird der Beginn eines Schaltvorganges festgestellt und die Differenzdrehzahl am kommenden Schaltelement überwacht. Der Beginn einer Schaltung wird festgestellt indem der Ist Verlauf der aktuellen Differenzdrehzahl am kommenden Schaltelement mit einem Soll-Verlauf der Differenzdrehzahl verglichen wird. Bei Abweichungen, die außerhalb eines Toleranzbandes liegen, wird ein Fehlerzustand erkannt. Die Ist-Differenzdrehzahl wird dabei aus der Differenz der Getriebeeingangsdrehzahl und der Getriebeausgangsdrehzahl bestimmt, multipliziert mit der Übersetzung des neuen Ganges. Der Soll-Verlauf der Differenzdrehzahl ergibt sich als Funktion der aktuellen Getriebeeingangsdrehzahl oder der aktuellen Getriebeausgangsdrehzahl, der Übersetzung des aktuellen Ganges, der Übersetzung des neuen Ganges und der Zeit.

Ein weiteres Verfahren, das ebenfalls auf die Differenzdrehzahl am kommenden Schaltelement Bezug nimmt, zeichnet sich dadurch aus, daß der Gradient des Verlaufs der Ist-Differenzdrehzahl , am kommenden Schaltelement mit einem Soll-Gradienten verglichen wird. Bei Abweichungen, die außerhalb eines Toleranzbandes liegen, wird ein Fehlerzustand erkannt. Der Gradient des Ist-Verlaufs der Differenzdrehzahl am kommenden Schaltelememt wird dabei aus der Differenz zweier nachfolgender Ist-Differenzdrehzahlwerte bestimmt, dividiert durch die verstrichene Meßzeit. Hier kann eine zusätzliche dynamische Filterung eingesetzt werden. Die Ist-Differenzdrehzahl wird aus der Differenz der Getriebeeingangsdrehzahl und der Getriebeausgangsdrehzahl bestimmt, multipliziert mit der Übersetzung des neuen Ganges. Der Verlauf des Soll-Gradienten der Differenzdrehzahl ergibt sich als Funktion der aktuellen Getriebeeingangsdrehzahl oder der aktuellen Getriebeausgangsdrehzahl, der aktuellen Übersetzung, der Übersetzung des neuen Ganges und der Zeit.

Für den Fachmann bieten sich ferner Lösungen an, bei denen die vorstehend beschriebenen Verfahren zumindest teilweise miteinander kombiniert werden.

Als Reaktion auf die Erkennung eines Fehlerzustandes soll bei den vorgeschlagenen Lösungen entweder das Getriebe in den alten Gang geschaltet oder in einen vorbestimmten Sicherheitszustand überführt werden.

## Patentansprüche

1. Verfahren zum Überwachen eines Schaltablaufs, insbesondere in einem automatischen Getriebe, bei dem ein zu einer ersten Getriebeübersetzung gehörendes (gehendes) Schaltelement geöffnet und ein zu einer weiteren Getriebeübersetzung gehörendes (kommendes) Schaltelement geschlossen wird, dadurch **gekennzeichnet**, daß mit dem Beginn des Schaltablaufs der Ist-Verlauf der Differenzdrehzahl am kommenden Schaltelement mit einem Soll-Verlauf verglichen wird, wobei die Ist-Differenzdrehzahl aus der Differenz der Getriebeeingangsdrehzahl und der Getriebeausgangsdrehzahl, multipliziert mit der Übersetzung des neuen Ganges, bestimmt wird und der Soll-Verlauf der Differenzdrehzahl als Funktion der aktuellen Getriebeeingangs- oder -ausgangsdrehzahl, der gegenwärtigen und neuen Übersetzung und der Zeit verglichen wird und bei nicht tolerierbaren Abweichungen ein Fehlerzustand erkannt und danach die erste Getriebeübersetzung beibehalten oder ein vorbestimmter Sicherheitszustand herbeigeführt wird.

2. Verfahren zum Überwachen eines Schaltablaufs, insbesondere in einem automatischen Getriebe, bei dem ein zu einer ersten Getriebeübersetzung gehörendes (gehendes) Schaltelement geöffnet und ein zu einer weiteren Getriebeübersetzung gehörendes (kommendes) Schaltelement geschlossen wird, dadurch **gekennzeichnet**, daß mit dem Beginn des Schaltablaufs der Gradient des Ist-Verlaufs der Differenzdrehzahl am kommenden Schaltelement mit einem Soll-Verlauf des Gradienten der Differenzdrehzahl verglichen wird, wobei der Gradient des Ist-Verlaufs der Differenzdrehzahl aus der Differenz zweier nachfolgender Ist-Differenzdrehzahlwerte, dividiert durch die verstrichene Meßzeit, gebildet wird und die jeweilige Ist-Differenzdrehzahl aus der Differenz der Getriebeeingangsdrehzahl, multipliziert mit der Übersetzung des neuen Ganges, bestimmt wird und der Soll-Verlauf des Gradienten der Differenzdrehzahl als Funktion der aktuellen Getriebeeingangs- oder -ausgangsdrehzahl, der gegenwärtigen und neuen Übersetzung und der Zeit verglichen wird und bei nicht tolerierbaren Abweichungen ein Fehlerzustand erkannt und danach die erste Getriebeübersetzung beibehalten oder ein vorbestimmter Sicherheitszustand herbeigeführt wird.

## Claims

1. A method for monitoring a switching procedure, more particularly in an automatic transmission, in which a (disengaging) switching element belonging to a first transmission range is opened and an (engaging) switching element belonging to a further transmission range is closed, characterised in that, at the start of the switching procedure, the actual course of the differential rotational speed at the engaging switching element is compared with a nominal course, the actual differential rotational speed being determined from the difference of the transmission input rotational speed and the transmission output rotational speed, multiplied by the transmission ratio of the new gear, and the nominal course of the differential rotational speed is compared as a function of the actual transmission input rotational speed or output rotational speed, the present and the new transmission ratio and the time, and an error condition is recognised in the case of non-tolerable deviations, and subsequently the first transmission range is maintained or a predetermined safety state is introduced.

2. A method for monitoring a switching procedure, more particularly in an automatic transmission, in which a (disengaging) switching element belonging to a first transmission range is opened and an (engaging) switching element belonging to a further transmission range is closed, characterised in that, at the start of the switching procedure, the gradient of the actual course of the differential rotational speed at the engaging switching element is compared with a nominal course of the gradient of the differential rotational speed, the gradient of the actual course of the differential rotational speed being formed by the difference of two successive actual differential rotational speed values, divided by the lapsed measurement time, and the respective actual differential rotational speed being determined from the difference of the transmission input rotational speed, multiplied by the transmission ratio of the new gear, and the nominal course of the gradient of the differential rotational speed is compared as a function of the actual transmission input or output rotational speed, the present and the new transmission ratio and the time, and an error condition is recognised in the case of non-tolerable deviations, and subsequently the first transmission range is maintained or a predetermined safety state is introduced.

## Revendications

1. Procédé pour surveiller un processus de changement de vitesse, notamment dans une boîte de vitesses automatique, dans lequel un élément de la boîte associé à la transmission (élément allant) est ouvert et un autre élément de la boîte de vitesses associé à la transmission (élément venant) est fermé, **caractérisé** en ce qu'avec le début du processus de changement de vitesse, le déroulement effectif de la vitesse différentielle sur l'élément allant est comparé à un déroulement de consigne, en ce que la vitesse différentielle effective est déterminée à partir de la différence entre la vitesse d'entrée de la boîte de vitesses et la vitesse de sortie de la boîte de vitesses multipliée par la transmission de la nouvelle vitesse à engager, et en ce que le déroulement de consigne de la vitesse différentielle est comparé en tant que fonction de la vitesse d'entrée ou de sortie effective de la boîte de vitesses, de la transmission présente et nouvelle et du temps, et en ce qu'en cas de divergences non tolérables, un état de défaut est détecté, suite à quoi la première transmission est maintenue ou un état de sécurité prédéfini est déclenché.

2. Procédé pour surveiller un processus de changement de vitesse, notamment dans une boîte de vitesses automatique, dans lequel un élément de la boîte associé à la transmission (élément allant) est ouvert et un autre élément de la boîte de vitesses associé à la transmission (élément venant) est fermé, **caractérisé** en ce qu'avec le début du processus du changement de vitesse, le gradient du déroulement de consigne de la vitesse différentielle sur l'élément venant est comparé à un déroulement de consigne du gradient de la vitesse différentielle, le gradient du déroulement réel de la vitesse différentielle étant formé par la différence entre deux valeurs de vitesse différentielle réelles successives, divisée par le temps de mesure passé et en ce que la vitesse différentielle concernée est déterminée à partir de la différence de la vitesse d'entrée de la boîte de vitesses multipliée par la transmission de la nouvelle vitesse à enclencher, en ce que le déroulement de consigne du gradient de la vitesse différentielle est comparé en tant que fonction de la vitesse d'entrée ou de sortie effective de la boîte de vitesses, de la transmission présente et nouvelle et du temps, et en ce qu'en cas de divergences non tolérables, un état de défaut est détecté, suite à quoi la première transmission est maintenue ou un état de sécurité prédéfini est déclenché.
